# EUROPÄISCHE PATENTSCHRIFT

(11) **EP 3 126 575 B1**
(45) Veröffentlichungstag und Bekanntmachung des Hinweises auf die Patenterteilung: **15.12.2021**
(21) Anmeldenummer: 14715299.5
(22) Anmeldetag: 04.04.2014
(51) Int. Cl.: E01D 19/10

(54) **BRÜCKENKAPPE UND BEFESTIGUNGSEINHEIT ZUR BEFESTIGUNG EINER BRÜCKENKAPPE**
BRIDGE CAP AND FASTENING UNIT FOR FASTENING A BRIDGE CAP
CORNICHE DE PONT ET ENSEMBLE DE FIXATION D'UNE CORNICHE DE PONT

(43) Veröffentlichungstag der Anmeldung: 08.02.2017
(73) Patentinhaber: Dieterle GBR, 78713 Schramberg (DE)
(72) Erfinder: DIETERLE, Frank, 77761 Schiltach (DE)
(74) Vertreter: Fleck, Hermann-Josef
(86) Internationale Anmeldenummer: PCT/EP2014/056795
(87) Internationale Veröffentlichungsnummer: WO 2015/149863

(56) Entgegenhaltungen:
- EP-A1- 2 042 657
- EP-A2- 2 466 008
- DE-C1- 19 537 399
- DE-U1-202008 001 661
- US-A1- 2006 251 492

## Beschreibung

Die Erfindung betrifft eine Brückenkappe, die zur Befestigung an einer Brücke eine Befestigungseinheit mit einem Befestigungsmittel und einer Führungsvorrichtung aufweist, welche eine zylindrische Ankerhülse umfasst. Ferner betrifft die Erfindung eine Befestigungseinheit zur Befestigung einer Brückenkappe.

Eine derartige Brückenkappe ist in der DE 10 2009 007 442 B4 angegeben. Hierbei wird die Brückenkappe mittels Befestigungsmitteln an den Seitenteilen einer Brücke oder eines Brückenabschnitts angebracht. Die Befestigungsmittel werden durch in die Brückenkappe eingebrachte Durchbrüche geführt, die jeweils mit einer verlorenen Ankerhülse versehen sind. Oberhalb der Ankerhülse befindet sich ein erweiterter Öffnungsabschnitt, welcher im montierten Zustand der Brückenkappe mit einem Deckel abgedeckt ist. Zudem schließt sich auf der Unterseite der Ankerhülse ein Plattenelement an. Durch eine derartige Ausgestaltung des Durchbruchs ergeben sich Vorteile beispielsweise bezüglich der Dichtigkeit und einer damit verbundenen Korrosionsbeständigkeit im montierten Zustand. Allerdings kann sie einen gewissen Aufwand bei der Fertigung und der Montage der Brückenkappe bedingen.

### Neuer Beschreibungsteil

### (zum Einfügen in die urspr. Beschreibung auf S. 1 nach Abs. 2 bzw. auf S. 2 vor Abs. 1)

Die DE 195 37 339 C1 zeigt eine Vorrichtung zur Verankerung von Betonkappen am Überbau von Brückenbauwerken. Die Befestigungseinheit weist dabei mehrere Teile auf, nämlich einen Losflansch mit einem Vorsprung und einem an dem Losflansch angeordneten Ankerbügel.

Weitere Brückenkappen mit Befestigungsvorrichtungen bzw. Befestigungsvorrichtungen sind in der EP 2 042 657 A1, EP 2 466 008 A2, der DE 20 2008 001 661 U1 und der US 2006/251492 A1 angegeben.

Der Erfindung liegt die Aufgabe zugrunde, eine Brückenkappe mit einer Befestigungseinheit der eingangs genannten Art bereitzustellen, die bei geringem Fertigungs- und Montageaufwand eine stabile und beständige Anbringung der Brückenkappe an einer Brücke erlaubt. Ferner soll eine derartige Befestigungseinheit bereitgestellt werden.

Diese Aufgabe wird bei der Brückenkappe mit den Merkmalen des Anspruchs 1 und bei der Befestigungseinheit mit den Merkmalen des Anspruchs 11 gelöst. Bei der Brückenkappe ist vorgesehen, dass die Befestigungseinheit aus getrennten Einzelteilen zusammengesetzt ist, die neben der Ankerhülse ein separates Übergangsstück mit einem an den Durchmesser der Ankerhülse angepassten ersten zylindrischen Abschnitt und einem von diesem abgekehrten, zu einer Außenseite der Brückenkappe gerichteten zweiten zylindrischen Abschnitt umfassen.

Bei der Befestigungseinheit ist vorgesehen, dass die Befestigungseinheit aus getrennten Einzelteilen zusammengesetzt ist, die neben der Ankerhülse ein separates Übergangsstück mit einem an den Durchmesser der Ankerhülse angepassten ersten zylindrischen Abschnitt und einem von diesem abgekehrten zweiten zylindrischen Abschnitt umfassen.

Die Zusammensetzung aus Einzelteilen ist vorteilhaft, da die Teile bereits während der Fertigung einer Brückenkappe einfach eingebracht werden können und so die Brückenkappe einfach herstellbar und montierbar ist. So wird der Fertigungs- und Montageaufwand erheblich verringert. Zudem können durch den erfindungsgemäßen modulartigen Aufbau einige Teile, insbesondere die Ankerhülse, als Standardbauteile (Rohr) bezogen werden, wodurch die Herstellung und die Anpassung an gegebene Anforderungen einfach und zudem die Kosten gering sind.

Eine vorteilhafte Ausgestaltung besteht darin, dass die Einzelteile der Befestigungseinheit ferner ein gegenüber der Ankerhülse erweitertes Bodenteil mit einer an den Durchmesser der Ankerhülse angepassten Öffnung aufweisen, wobei das Bodenteil in einer Ausnehmung an der von der Außenseite abgekehrten Anlageseite der Brückenkappe aufgenommen ist. Das Bodenteil bietet eine vorteilhafte Einleitung der Kräfte über Schraubenanker in den Brückenflügel. Auch kann diese Ausgestaltung die Dichtigkeit erhöhen, indem sich das Bodenteil in eine zwischen der Brücke und der Brückenkappe befindliche Dichtung, die z.B. als Bitumenbahn ausgebildet ist, drückt.

Eine einfache Variabilität im Einsatz der Befestigungseinheit bei Brückenkappen unterschiedlicher Dicke wird dadurch erreicht, dass die Einzelteile der Befestigungseinheit weiterhin eine in ihrem Durchmesser an den zweiten zylindrischen Abschnitt angepasste Ausgleichshülse mit einer derartigen Länge aufweisen, dass die Ausgleichshülse die Führungsvorrichtung von dem Übergangsstück zumindest bis nahe der Außenseite der Brückenkappe verlängert. So können die Befestigungseinheiten einfach an Brückenkappen unterschiedlicher Dicken d angepasst werden. Dabei erfolgt die Anpassung an die Brückenkappen-Dicke beispielsweise über die Ausgleichshülse, welche vorzugsweise ein einfach zu kürzendes Rohr und somit ein günstiges Standardbauteil darstellt. Die Verlängerung bis zumindest nahe der Außenseite erlaubt es, die Ausgleichshülse mit einem Verschlusselement wie beispielsweise einem Deckel zu versehen. Eine weitere Anpassungsmöglichkeit besteht über die Länge der Ankerhülse.

Schutz des Befestigungsmittels vor äußeren Einflüssen bietet ein Deckel, mittels dessen die Ausgleichshülse von der Außenseite aus verschließbar ist.

Für eine erleichterte Montage ist es vorteilhaft, dass die Ausgleichshülse gegenüber der Ankerhülse einen größeren Durchmesser aufweist, wobei das Übergangsstück von dem Durchmesser der Ausgleichshülse auf den Durchmesser der Ankerhülse überführt. So kann beispielsweise für die Montage und Demontage das Befestigungsmittel, welches vonseiten der Ausgleichshülse durch die Ankerhülse geführt wird, einfacher von einem Werkzeug unter formschlüssigem Angriff betätigt werden. Durch die Möglichkeit, dass die Befestigungseinheit in Richtung der Oberflächennormalen der Außenseite eines Deckabschnitts oder eines Seitenabschnitts der Brückenkappe oder der Anlageseite der Brückenkappe an die Brücke ausgerichtet ist oder schräg in einem Winkel von mindestens 10° gegenüber der Oberflächennormalen, ergibt sich zum einen eine hohe Flexibilität im Einbauort der Befestigungseinheit. Zum anderen bewirkt insbesondere die Schrägstellung erhöhte Kräfte z.B. gegenüber in horizontaler Richtung auf den Bordstein bzw. die Brückenkappe wirkende Anprall-Lasten. Gleichzeitig wird eine stabile Verspannung der Brückenkappe gegen den Brückenflügel erreicht.

Vereinfachend bei der Montage wirkt sich aus, dass zumindest die Ausgleichshülse, das Übergangsstück und die Ankerhülse bereits während der Fertigung der Brückenkappe in die Brückenkappe eingebracht sind.

Eine vorteilhafte Ausgestaltungsvariante sieht vor, dass das Übergangsstück der Befestigungseinheit in einem Übergangsbereich zwischen dem ersten und dem zweiten zylindrischen Abschnitt eine Anlage für einen Kopfteil des Befestigungsmittels aufweist, wobei ein von dem Kopfteil abgekehrter Gewindeabschnitt bei vollständig eingeführtem Befestigungsmittel über die Anlageseite der Brückenkappe zum Verbinden mit der Brücke vorsteht. Die Anlage dient als Widerlager zum Ausüben von Spannkräften bei der Befestigung der Brückenkappe an der Brücke. Auf eine Unterlegscheibe kann verzichtet werden. Zudem ist der Kopfteil des Befestigungsmittels in dem Übergangsstück gegen die äußere Umgebung geschützt, da sich an dieses in Richtung der Außenseite der mit dem Deckel verschließbare zweite zylindrische Abschnitt und ggf. die mit dem Deckel verschließbare Ausgleichshülse anschließt.

Ist der Deckel derart ausgestaltet, dass er eine Dichtung und/oder einen Abdeckabschnitt mit einer Fase aufweist und dass er mit einem Zylinderabschnitt in die Ausgleichshülse eingesetzt ist, ergeben sich verschiedene Vorteile. Zum einen ist der Deckel aufgrund der Fase einfach zu montieren. Zum anderen ermöglicht die Dichtung einen Schutz des in der Führungsvorrichtung geführten Befestigungsmittels z.B. gegenüber korrosionsfördernden Flüssigkeiten wie etwa salzhaltiges Wasser. Der Zylinderabschnitt bietet eine gute Führung, eine stabile Lage und eine gute Anpassbarkeit des Deckels in der den Deckel aufnehmenden Ausgleichshülse.

Die Möglichkeit, dass das Befestigungsmittel eine wieder lösbare Schraube ist, erleichtert eine eventuelle Demontage.

Die Verwendung von Einzelteilen der Befestigungseinheit, die ferner ein gegenüber der Ankerhülse erweitertes Bodenteil mit einer an den Durchmesser der Ankerhülse angepassten Öffnung aufweisen, unterstützt eine vorteilhafte Einleitung der Kräfte über Schraubenanker in den Brückenflügel.

Von Vorteil für einen Einsatz bei Brückenkappen variabler Dicken d ist es, dass die Einzelteile der Befestigungseinheit weiterhin eine in ihrem Durchmesser an den zweiten zylindrischen Abschnitt angepasste Ausgleichshülse umfassen.

Eine geschützte Umgebung innerhalb der Führungsvorrichtung wird dadurch gewährleistet, dass ein Deckel vorhanden ist, mittels dessen die Ausgleichshülse von ihrem dem Übergangsstück abgekehrten, oberen Rand aus verschließbar ist.

Vereinfachend auf die Montage wirkt sich aus, dass die Ausgleichshülse gegenüber der Ankerhülse einen größeren Durchmesser aufweist, wobei das Übergangsstück von dem Durchmesser der Ausgleichshülse auf den Durchmesser der Ankerhülse überführt.

Die Möglichkeiten, dass der obere Rand der Ausgleichshülse in einer zur Mittellängsachse rechtwinklig oder schräg ausgedehnten Ebene liegt, so dass die Befestigungseinheit in Richtung einer Oberflächennormalen oder definiert schräg in einem Winkel von mindestens 10° gegenüber der Oberflächennormalen in einer Brückenkappe montierbar ist, ermöglicht auch eine gegenüber horizontal wirkenden Kräften stabile Befestigung.

Vorteilhaft für das Ausüben von Spannkräften bei der bei der Befestigung von Brückenkappen gestaltet sich, dass das Übergangsstück der Befestigungseinheit in einem Übergangsbereich zwischen dem ersten und dem zweiten zylindrischen Abschnitt eine Anlage für einen Kopfteil des Befestigungsmittels aufweist. So kann beispielsweise auch auf eine Unterlegscheibe verzichtet werden.

Bei einer Ausgestaltung des Deckels derart, dass er eine Dichtung und/oder einen Abdeckabschnitt mit einer Fase aufweist und dass er mit einem Zylinderabschnitt in die Ausgleichshülse eingesetzt ist, ergeben sich Vorteile bezüglich der Montage, der Dichtigkeit und der Lage und Anpassbarkeit des Deckels.

Ist der Zylinderabschnitt mit einer umlaufenden Nut versehen, in welche die Dichtung eingesetzt ist, fördert die Nut einen sicheren Sitz der Dichtung. Dabei kann als Dichtung beispielsweise mit einem O-Ring ein günstiges Standardteil zum Einsatz kommen.

Ein Befestigungsmittel in Form einer wieder lösbaren Schraube erlaubt eine einfache Demontage.

Die Möglichkeit, dass die Einzelteile der Befestigungseinheit zumindest teilweise vormontierbar oder vormontiert sind, lässt ein einfaches Einbringen von zumindest Teilen der Befestigungseinheit während der Fertigung einer Brückenkappe zu.

Nachfolgend wird die Erfindung anhand von Ausführungsbeispielen unter Bezugnahme auf die Zeichnungen näher erläutert. Es zeigen:
- Fig. 1: eine Brücke mit Brückenkappen in einer perspektivischen schematischen Darstellung,
- Fig. 2: eine Führungsvorrichtung einer Befestigungseinheit in seitlicher Ansicht,
- Fig. 3A: einen Deckel gemäß Fig. 2 in seitlicher Ansicht,
- Fig. 3B: einen Deckel gemäß Fig. 2 in Draufsicht,
- Fig. 4A: eine Ausgleichshülse gemäß Fig. 2 in seitlicher Ansicht,
- Fig. 4B: eine Ausgleichshülse gemäß Fig. 2 in perspektivischer Draufsicht,
- Fig. 5A: ein Übergangsstück gemäß Fig. 2 in seitlicher perspektivischer Ansicht,
- Fig. 5B: ein Übergangsstück gemäß Fig. 2 in Draufsicht,
- Fig. 6A: eine Ankerhülse gemäß Fig. 2 in seitlicher Ansicht,
- Fig. 6B: eine Ankerhülse gemäß Fig. 2 in perspektivischer Draufsicht,
- Fig. 7A: ein Bodenteil gemäß Fig. 2 in seitlicher perspektivischer Ansicht,
- Fig. 7B: ein Bodenteil gemäß Fig. 2 in Draufsicht,
- Fig. 8: eine Führungsvorrichtung einer Befestigungseinheit in schräger Ausführung in seitlicher perspektivischer Ansicht,
- Fig. 9A: einen Deckel für eine Führungsvorrichtung gemäß Fig. 8 in seitlicher Ansicht,
- Fig. 9B: einen Deckel gemäß Fig. 9A in Draufsicht,

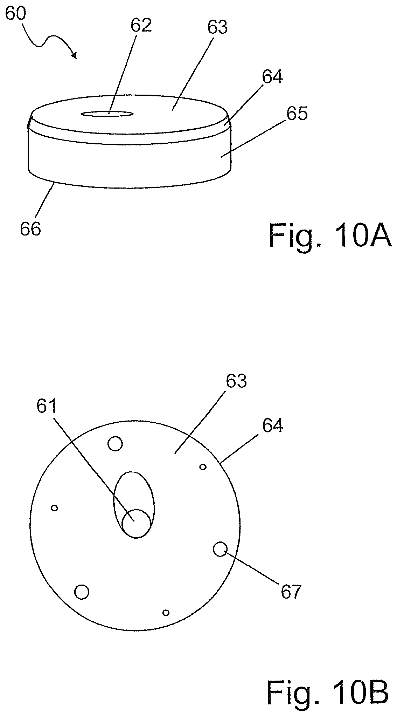

- Fig. 10A: ein Bodenteil gemäß Fig. 8 in seitlicher perspektivischer Ansicht,
- Fig. 10B: ein Bodenteil gemäß Fig. 8 in Draufsicht und
- Fig. 11: eine Brückenkappe mit einer oben liegenden und einer seitlichen Befestigungseinheit in schematischer Seitenansicht.

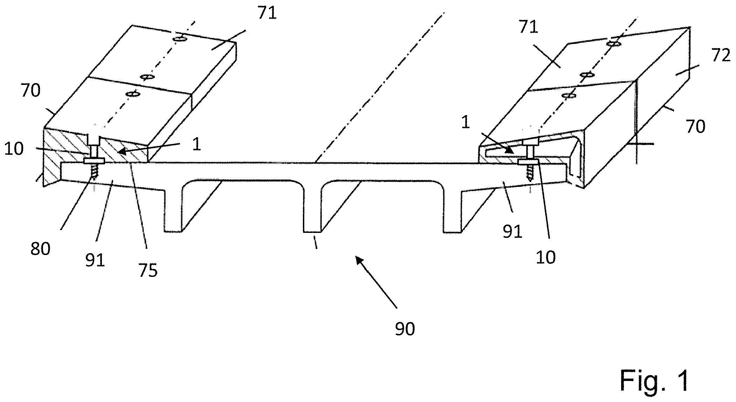

Fig. 1 zeigt einen Brückenabschnitt 90 mit Seitenteilen 91, die den seitlichen Abschluss in Längsrichtung des Brückenabschnitts 90 bilden. An den Seitenteilen 91 sind segmentierte und als separate Bauteile ausgeführte Brückenkappen 70 befestigt. Die Brückenkappen 70 können massiv, ohne Hohlkammern (linke Seite in Fig. 1) ausgestaltet oder mit Hohlkammern (rechte Seite in Fig. 1) versehen sein, wobei die Hohlkammern bei entsprechender Ausbildung auch zum Einlegen von Kabeln, Rohren oder dgl. genutzt werden können. An den Brückenkappen 70 kann ein Bordstein, z.B. Naturstein, befestigt oder integriert sein.

Die in Ansicht von der Stirnseite L-förmigen Brückenkappen 70 sind mit einer Anlageseite 75 zumindest teilweise mit der Brücke in Kontakt gebracht. Sie weisen Deckabschnitte 71 auf, welche auf der Oberseite der Seitenteile 91 aufliegen, und Seitenabschnitte 72, welche die Seitenteile 91 des Brückenabschnitts 90 seitlich übergreifen. Die Seitenabschnitte 72 der Brückenkappe 70 bieten somit einen seitlichen Schutz des Brückenabschnitts 90 und unterstützen eine stabile Lage der Brückenkappe 70. Neben der dargestellten Position könnte die Brückenkappe 70 auch in anderen Bereichen montiert werden, z.B. mit dem Deckabschnitt 71 von unten an den Seitenteilen 91. Denkbar wäre auch eine andere Ausführung der Brückenkappe 90, beispielsweise ohne Seitenabschnitte 72, die auch zwischen zwei Fahrbahnen angebracht werden könnte.

Die Anbringung der Brückenkappe 70 an den Seitenteilen 91 erfolgt über Befestigungseinheiten 1, die jeweils ein Befestigungsmittel 80 und eine in die Brückenkappe 70 eingebrachte Führungsvorrichtung 10 aufweisen. Die Befestigungsmittel 80 sind in Form von Bolzen, insbesondere lösbaren Schraubverbindungen, vorgesehen, die in daran in Position und Form angepasste Gegenelemente eingreifen. Die Schrauben sind dabei zur einfachen Verbindung z.B. selbstschneidend ausgebildet und aus nicht rostendem Material hergestellt. Vorteilhaft sind auch die übrigen Einzelteile der Befestigungseinheit 1 aus korrosionsbeständigem Material hergestellt.

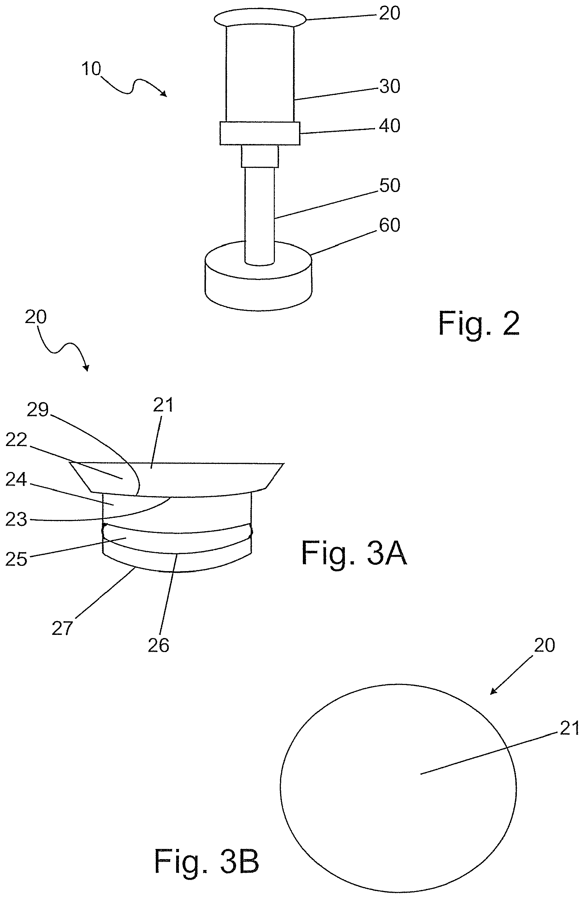

Die Führungsvorrichtung 10 sowie ein Deckel 20 zum Verschließen der Führungsvorrichtung 10 sind in einem in Fig. 2 dargestellten Ausführungsbeispiel gezeigt. Sie umfasst mehrere Einzelteile, die entlang einer gemeinsamen, vertikal verlaufenden Längsmittelachse angeordnet sind. Zuoberst befindet sich der Deckel 20. Unterhalb des Deckels 20 schließt sich eine zylindrische Ausgleichshülse 30 an, welche in ein sie umfangsseitig umfassendes Übergangsstück 40 mündet. Das Übergangsstück führt in eine zylindrische Ankerhülse 50, an welcher ein Bodenteil 60 angeschlossen ist.

Wie aus Fig. 3A und B ersichtlich, weist der Deckel 20 einen scheibenartigen Abdeckabschnitt 21 mit einer Fase 22 auf, welche in eine in Richtung eines Zylinderabschnitts 24 weisende Ringfläche 23 überleitet. Die Ringfläche 23 bildet einen stufenartigen Übergang zu dem Zylinderabschnitt 24, der sich an den Abdeckabschnitt 21 anschließt. Sie ergibt sich dadurch, dass die Unterseite des Abdeckabschnitts 21 einen größeren Durchmesser aufweist als eine Oberseite des Zylinderabschnitts 24. Der Zylinderabschnitt 24 ist mit einer in ihrer Form an eine Dichtung 25 angepasste, umlaufende Nut 26 versehen, in welche die Dichtung 26 eingebracht ist. Die Nut 26 sorgt für eine definierte und stabilisierte Lage der Dichtung 25, die hier als O-Ring ausgeführt ist, und eine gute Abdichtung. Denkbar ist auch eine andere Form der Dichtung, beispielsweise mit einem 4-kantigen Querschnitt, und/oder die Verwendung mehrerer Dichtungen 25. Ferner könnte die Dichtung 25 auch an einem anderen Abschnitt des Deckels 20, z.B. an dessen Ringfläche 23 angebracht sein, wobei eine flache Ausgestaltung von Vorteil wäre. Den von dem Abdeckabschnitt 21 abgewandten Abschluss des Deckels 20 bildet eine flache Unterseite 27 oder ein stirnseitiger Rand des hohl oder aus Vollmaterial ausgebildeten Zylinderabschnitts 24.

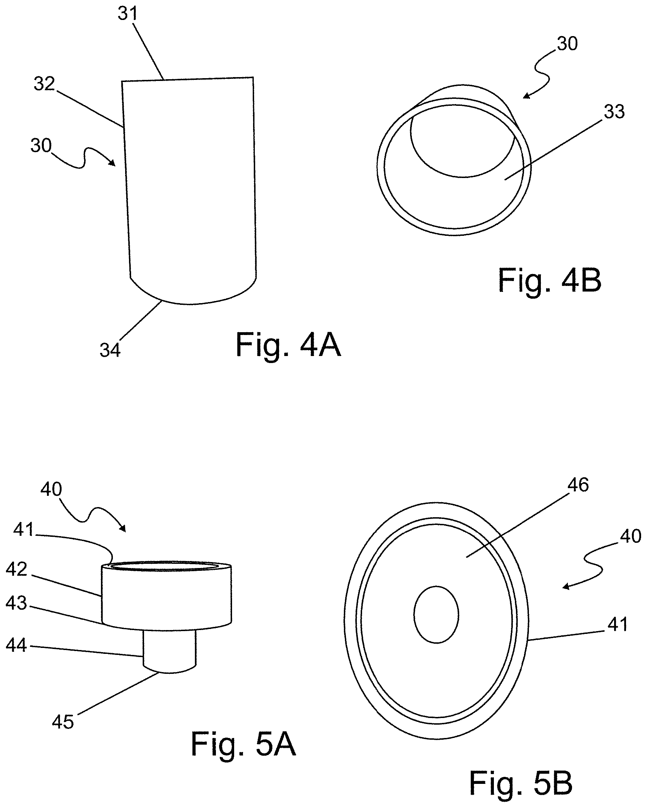

Die an den Deckel 20 anschließende Ausgleichshülse 30 wird, wie Fig. 4A und 4B zeigen, von einem zylindrischen Rohr gebildet. Der Durchmesser des Rohrs ist derart, dass es den Zylinderabschnitt 24 des Deckels 20 formschlüssig in sich aufnimmt.

Wie aus Fig. 3A ersichtlich, weist die Ausgleichshülse 30 einen radial von der Längsmittelachse beabstandeten, umlaufenden, stirnseitigen oberen Rand der Ausgleichshülse 31, eine Außenfläche 32 und einen radial von der Längsmittelachse beabstandeten, umlaufenden, stirnseitigen unteren Rand 34 auf. Zudem lässt Fig. 3B die Innenfläche der Ausgleichshülse 33 erkennen.

Fig. 5A und 5B zeigen das Übergangsstück 40, welches sich gemäß Fig. 2 zwischen der Ausgleichshülse 30 und der Ankerhülse 50 befindet. Es ist zur Aufnahme und Durchführung eines Befestigungsmittels 80 hohl ausgeführt. Das Übergangsstück 40 weist einen in Richtung der Ausgleichshülse 30 weisenden, radial von der Längsmittelachse beanstandeten, umlaufenden, stirnseitigen oberen Rand 41 auf. Der obere Rand 41 schließt einen zweiten zylindrischen Abschnitt 42 in Richtung der Ausgleichshülse 30 ab. Auf der dem oberen Rand 41 abgewandten Seite schließt sich an den zweiten zylindrischen Abschnitt 42 ein stufenartig ausgebildeter Übergangsbereich 43 an. Dieser weist eine sich radial erstreckende, konzentrisch zur Längsmittelachse angeordnete Ringfläche 46 auf, die in Fig. 5B erkennbar ist. Der Übergangsbereich 43 leitet in einen vom oberen Rand des Übergangsstücks 41 abliegenden ersten zylindrischen Abschnitt 44 über, der ebenfalls konzentrisch zur Längsmittelachse angeordnet ist. Der erste zylindrische Abschnitt 44 weist einen kleineren Durchmesser auf als der zweite zylindrische Abschnitt 42. Der erste zylindrische Abschnitt 44 wird von einem in Richtung der Ankerhülse 50 liegenden, radial von der Längsmittelachse beabstandeten, umlaufenden, stirnseitigen unteren Rand 45 abgeschlossen. Die Innendurchmesser des ersten und zweiten zylindrischen Abschnitts 44 und 42 sind derart, dass jeweils die Enden der Ankerhülse 50 und der Ausgleichshülse 30 formschlüssig eingebracht werden können.

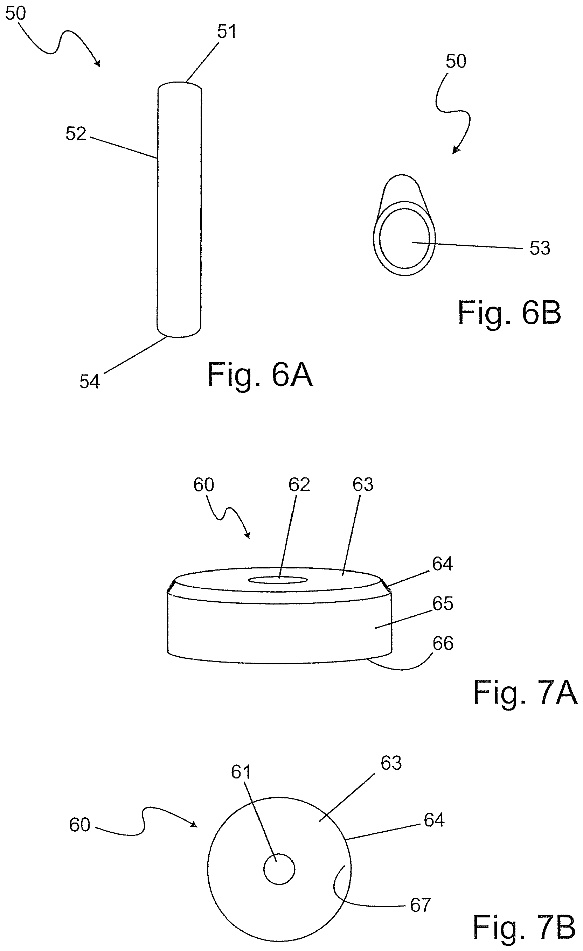

Die in Fig. 6A und 6B dargestellte Ankerhülse 50 wird, ähnlich wie die Ausgleichshülse 30, von einem zylindrischen Rohr gebildet. Gegenüber der Ausgleichshülse 30 weist es jedoch einen kleineren Durchmesser auf. Fig. 6A lässt einen radial von der Längsmittelachse beabstandeten, umlaufenden, stirnseitigen oberen Rand der Ankerhülse 51, eine Außenfläche 52 und einen radial von der Längsmittelachse beabstandeten, umlaufenden, stirnseitigen unteren Rand der Ankerhülse 54 erkennen. Zudem zeigt Fig. 6B die Innenfläche der Ankerhülse 53.

Wie in Fig. 2 erkennbar, weist die Führungsvorrichtung 10 weiterhin ein Bodenteil 60 auf. Dieses ist in Fig. 7A und 7B detaillierter dargestellt. Wie Fig. 7A und 7B zeigen, ist das Bodenteil 60 zylinderförmig ausgestaltet und mit einer zentrierten Öffnung 61 versehen, welche eine in Fig. 7A ersichtliche Öffnungswand 62 aufweist. Denkbar wäre auch eine andere Form des Bodenteils, beispielsweise mehrkantig, insbesondere 4-kantig. Die Öffnung 61 könnte auch mit einem Stutzen versehen sein, welcher die Öffnungswand 62 nach oben verlängert. Die glatt ausgeführte Oberseite 63 geht über eine Übergangsfase in eine zylindrische Seitenfläche 65 über, an welche sich eine von der Oberseite 63 abgewandte Unterseite 66 anschließt. In Fig. 7B sind Bohrungen 67 ersichtlich, welche sich bis zur Unterseite 66 fortsetzen und als Befestigungsstellen dienen können. Die Bohrungen können auch zur Positionierung des Bodenteils 60 während der Fertigung an Justierdornen dienen.

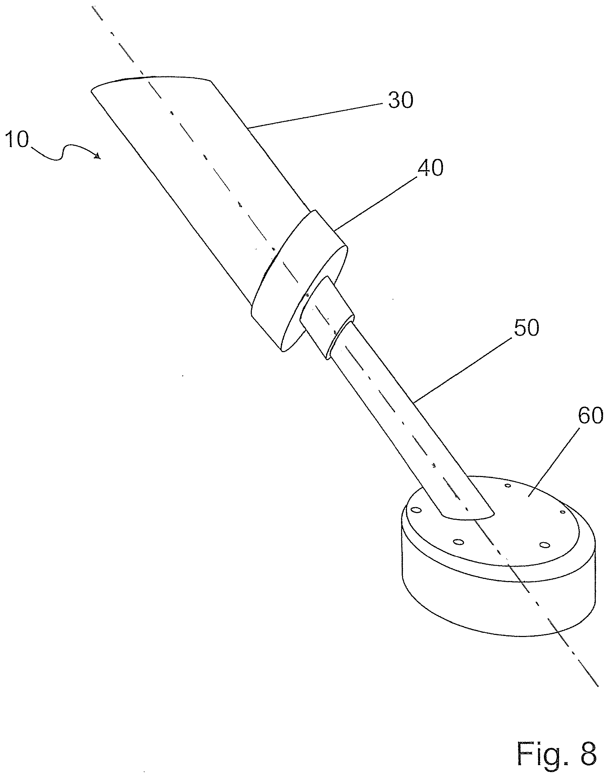

Eine andere Variante der Führungsvorrichtung 10 ist in Fig. 8 dargestellt, in welcher im Unterschied zu Fig. 2 kein Deckel 20 dargestellt ist. Hierbei verläuft ihre Längsmittelachse schräg, d.h. in einem Winkel zu der Flächennormalen der Oberfläche, auf welcher die Bodenplatte 60 positioniert ist. Nachfolgend wird lediglich auf die Unterschiede zu der in Fig. 2 gezeigten Ausführung eingegangen. Gleiche Bezugszeichen beziehen sich dabei auf gleiche funktionelle Teile, und zur Vermeidung von Wiederholungen wird auf die vorstehenden Ausführungen verwiesen.

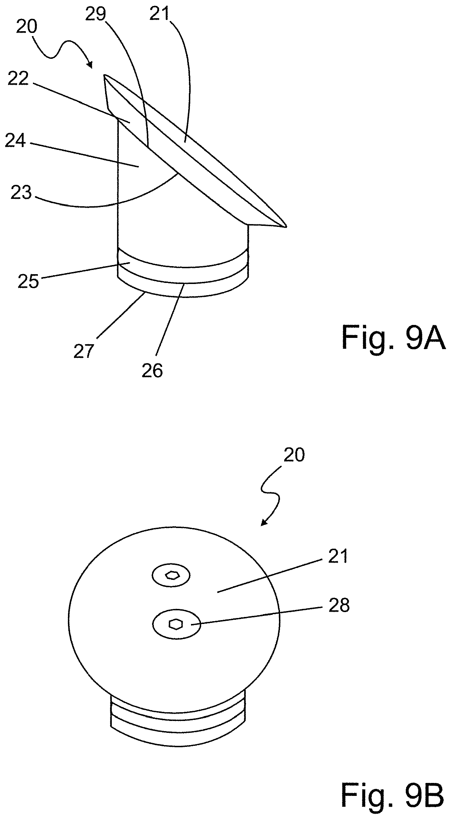

Der Deckel 20, welcher zur Verwendung bei der Führungsvorrichtung 10 aus Fig. 8 vorgesehen ist, ist in Fig. 9A und 9B abgebildet. Hierbei ist der Deckel 20 derart ausgestaltet, dass der auf dem Zylinderabschnitt 24 angebrachte Abdeckabschnitt 21 z.B. parallel zu der Oberfläche angeordnet ist, auf der die Bodenplatte 60 positioniert ist. Der Zylinderabschnitt ist beim Einsatz koaxial zu der Längsmittelachse der Führungsvorrichtung 10 ausgerichtet. Diese Ausgestaltung wird dadurch erreicht, dass die Oberseite 29 des Zylinderabschnitts 24, auf welcher der Abdeckabschnitt 21 aufliegt, in der Weise schräg zur Längsmittelachse angeordnet ist, dass sie z.B. zu der Oberfläche, auf der die Bodenplatte 60 positioniert ist, parallel verläuft. Die Unterseite 27 verläuft jedoch in einer rechtwinklig zur Längsmittelachse angeordneten Ebene oder besitzt einen in dieser Ebene verlaufenden, radial beabstandeten Umfangsrand. In Fig. 9B sind zudem Fixiermittel 28 zur Fixierung des Abdeckabschnitts 21 auf dem Zylinderabschnitt 24 erkennbar, welche bevorzugt Schrauben sind. Sie sind im Abdeckabschnitt 21 flächenbündig versenkt, sodass sie eine glatte Oberfläche gewährleisten. Zur formschlüssigen Aufnahme eines Werkzeugs weisen sie 6-kantige Ausnehmungen auf, welche jedoch auch eine andere Form aufweisen könnten. Die Deckel 20 könnte auch auf andere Art befestigt, beispielsweise geklebt sein. Der auf die beschriebene Weise gestaltete Deckel 20 kann die axial zur Längsmittelache verlaufende Ausgleichshülse 30 flächenbündig und dicht verschließen. Denn wie aus Fig. 8 ersichtlich, ist der obere Rand der Ausgleichshülse 31 ebenfalls so geformt, dass er parallel zu der Oberfläche angeordnet ist, auf der die Bodenplatte 60 positioniert ist, oder parallel zur benachbarten Oberseite der Brückenkappe ausgerichtet. Der untere Rand der Ausgleichshülse verläuft in einer rechtwinklig zur Längsmittelachse ausgerichteten Ebene.

Das in Fig. 8 gezeigte Übergangsstück 40 und die Ankerhülse 50 entsprechen in ihren Formen den in Fig. 5A und 5B bzw. 6A und 6B beschriebenen Teilen. Die in Fig. 8 gezeigte Bodenplatte 60 weist hingegen Unterschiede gegenüber der Ausführung nach Fig. 2 auf, indem die Öffnungswand 62 der Öffnung 61 entlang der Längsmittelachse verläuft, während Ober- und Bodenseite 63 und 66 parallel zur Oberfläche verlaufen. Somit sind die Ausgleichshülse 30 und die Ankerhülse 50 schräg gegenüber der Bodenplatte 60 angeordnet, wie in Fig. 8 dargestellt.

Die Einzelteile lassen sich gemäß Fig. 2 zumindest teilweise vormontieren. Hierzu werden die Ausgleichshülse 30 sowie die Ankerhülse 50 formschlüssig jeweils in den zweiten bzw. in den ersten zylindrischen Abschnitt 42 bzw. 44 des Übergangsstücks 40 eingebracht. Vorteilhafterweise werden hierbei die Hülsen in das Übergangsstück 40 eingesetzt und nicht die Hülsen über das Übergangsstück 40 geschoben. Dies vermeidet eine Stufe innerhalb der Hülse in montiertem Zustand. Eine Verbindungsvariante ist hierbei, die Hülsen in das Übergangsstück 40 zu schrauben. Dabei sind die in das Übergangsstück 40 ragenden Teile der Ausgleichshülse 30 und der Ankerhülse 50 sowie die Innenwände der zylindrischen Abschnitte 42 bzw. 44 mit einem Gewinde versehen. Bevorzugt werden die Komponenten ineinander gesteckt. Bei der Einbringung der Ausgleichshülse 30 kann die Ringfläche 46 des Übergangsstücks 40 als Anschlag dienen. Daneben ist es denkbar, die Ringfläche 46 derart auszugestalten, dass sie etwas in die Ringöffnung zum zweiten zylindrischen Abschnitt hin übersteht, um so ebenfalls als Anschlag für den oberen Rand der Ankerhülse 51 zu dienen.

Optional kann auch das Bodenteil 60 bereits vormontiert werden, indem es an der Ankerhülse 50 befestigt wird. Hierzu kann die Ankerhülse 50 ebenfalls in das Bodenteil eingeschraubt oder gesteckt oder auch über seitliche Verbindungsstege befestigt, z. B. verschweißt werden.

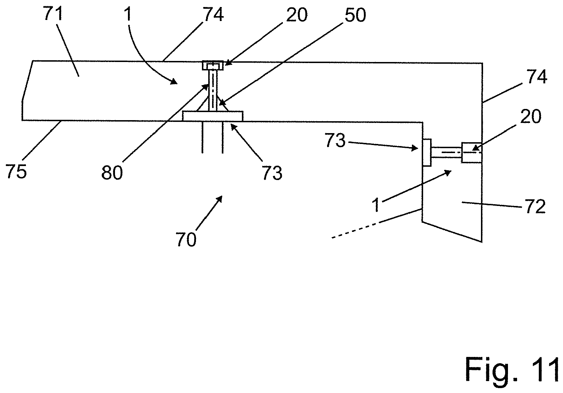

Die vormontierten Teile sind nun bei der Fertigung der Brückenkappen 70 einfach, beispielsweise durch Eingießen, in die Brückenkappen 70 einbringbar. Das Bodenteil 60 befindet sich dabei in einer Ausnehmung 73 der Brückenkappe 70, so dass es an der unteren Oberfläche (Anlageseite 75) der Brückenkappe 70 bündig abschließt oder etwas, zumindest nicht großteils, hervorsteht und die Brückenkappe 70 im Übrigen zumindest teilweise mit ihrer Anlageseite 75 stabil aufliegt. Dabei weist die Ankerhülse 50 in Richtung der Anlageseite 75 und die Ausgleichshülse 30 in Richtung der von der Anlageseite 75 abgewandten Außenseite 74 der Brückenkappe 70. Die Führungsvorrichtung 10 kann in Richtung der Oberflächennormalen einer Außenseite 74 des Deckabschnitts 71 oder eines Seitenabschnitts 72 der Brückenkappe 70 oder der der Brücke zugekehrten Anlageseite 75 der Brückenkappe ausgerichtet sein, wie in Fig. 11 beispielhaft gezeigt. Sie kann auch schräg in einem Winkel von mindestens 10° gegenüber der betreffenden Oberflächennormalen ausgerichtet sein.

Zudem kann die Führungsvorrichtung 10 an Brückenkappen 70 unterschiedlicher Dicke d angepasst werden, indem Ausgleichshülsen 30 unterschiedlicher Längen zum Einsatz kommen oder diese vor oder nach Einbau entsprechend abgelängt werden. Die Längenanpassung über die, bevorzugt aus einem Rohr bestehende, Ausgleichshülse 30 ist von Vorteil, da hierzu mit dem Rohr ein günstiges Standardbauteil verwendet werden kann. In angepasstem Zustand sollte die Ausgleichshülse 30 bis zumindest nahe der Außenseite 73 der Brückenkappe 70 heranreichen, damit der Deckel 20 auf die Ausgleichshülse 30 dichtend aufgesetzt werden kann. Auf die Ausgleichshülse könnte auch verzichtet werden, etwa bei geringen Dicken d der Brückenkappe 70. Dann ist der Deckel 20 vorteilhaft derart geformt, dass er auf das Übergangsstück 40 dichtend aufgesetzt werden kann.

Im unmontierten Zustand bilden die beschriebenen Einzelteile der Befestigungseinheit 1 sowohl bei Ausführung für den Einbau in Normalenrichtung zur Oberfläche als auch in Schrägrichtung einen angepassten oder einfach an die Einbausituation anpassbaren Bausatz.

Bei der Montage der Brückenkappe 70 an einem Brückenabschnitt 90 dient die Führungsvorrichtung 10 als Durchführung und Aufnahme für das Befestigungsmittel 80. Zudem eignet sie sich als Bohrlehre, etwa zum Anbringen von Gegenelementen der Befestigungsmittel 80 an der Brücke. Über den gegenüber der Ankerhülse 50 vergrößerten Durchmesser der Ausgleichshülse 30 ist das Befestigungsmittel 80 einfach in die Führungsvorrichtung einbringbar, durch die Ankerhülse 50 vorzugsweise unter geringem Spiel durchführbar und mit einem Werkzeug unter Eingriff in das betreffende Gegenelement der Brücke derart festspannbar, dass es die erforderlichen Spannkräfte zur Befestigung der Brückenkappe 70 aufbringt. Dabei kommt der Kopfteil des Befestigungsmittels 80 auf der Ringfläche 46 des Übergangsstücks 40 in Anlage, welches somit als Widerlager und Unterlage dient, um die Spannkräfte großflächiger aufzunehmen. Beim Spannen des Befestigungsmittels 80 wird zudem das Bodenteil 60 der Führungsvorrichtung 10 gegen eine zwischen der Anlageseite 75 der Brückenkappe 70 und dem Brückenabschnitt 90 befindlichen Dichtvorrichtung gepresst. Dies ergibt eine vorteilhafte Dichtwirkung gegen Eindringen von beispielsweise korrosionsfördernden Flüssigkeiten wie etwa Salzwasser in die betreffenden Elemente der Befestigungsvorrichtungen 80. Ebenfalls zum Schutz vor solchen Medien ist im montierten Zustand die Führungsvorrichtung 10 mit einer Abdeckung, welche insbesondere der Deckel 20 sein kann, dicht und flächenbündig verschlossen. Der Deckel 20 ist hierfür zur erleichterten Montage mit der Fase 22 versehen. Alternativ könnte auch eine Abdichtung beispielsweise aus Bitumen verwendet werden.

Die vorstehenden Beschreibungen der Befestigungseinheit 1 zur Befestigung einer Brückenkappe 70 zeigen, dass eine solche durch ihren aus Einzelteilen bestehenden, zum Teil vormontierbaren Aufbau bereits einfach während der Fertigung in die Brückenkappe 70 eingebracht werden kann. Mit den Befestigungsmitteln 80 und den passenden Deckeln 20 versehen, kann auf diese Weise eine Brückenkappe 70 mit einer für eine einfache Montage vorbereiteten Befestigungseinheit 1 bereitgestellt werden. Der erfindungsgemäße Aufbau aus Einzelteilen ermöglicht zudem eine flexible Anpassung an verschiedene Einbaupositionen und Dicken d von unterschiedlichen Brückenkappen, wobei kostenoptimierend auf Standardteile zurückgegriffen werden kann.

## Patentansprüche

1. Brückenkappe (70), die zur Befestigung an einer Brücke (90) eine Befestigungseinheit (1) mit einem Befestigungsmittel (80) und einer in die Brückenkappe (70) eingebrachten Führungsvorrichtung (10) aufweist, welche eine zylindrische Ankerhülse (50) umfasst,
**dadurch gekennzeichnet,**
**dass** die Befestigungseinheit (1) aus getrennten Einzelteilen zusammengesetzt ist, die neben der Ankerhülse (50) ein separates Übergangsstück (40) mit einem an den Durchmesser der Ankerhülse (50) angepassten ersten zylindrischen Abschnitt (44) und einem von diesem abgekehrten, zu einer Außenseite (74) der Brückenkappe (70) gerichteten zweiten zylindrischen Abschnitt (42) umfassen.

2. Brückenkappe (70) nach Anspruch 1,
**dadurch gekennzeichnet,**
**dass** die Einzelteile der Befestigungseinheit (1) ferner ein gegenüber der Ankerhülse (50) erweitertes Bodenteil (60) mit einer an den Durchmesser der Ankerhülse (50) angepassten Öffnung (61) aufweisen, wobei das Bodenteil (60) in einer Ausnehmung (73) an der von der Außenseite (74) abgekehrten Anlageseite (75) der Brückenkappe (70) aufgenommen ist.

3. Brückenkappe (70) nach Anspruch 1 oder 2,
**dadurch gekennzeichnet,**
**dass** die Einzelteile der Befestigungseinheit (1) weiterhin eine in ihrem Durchmesser an den zweiten zylindrischen Abschnitt (42) angepasste Ausgleichshülse (30) mit einer derartigen Länge aufweisen, dass die Ausgleichshülse (30) die Führungsvorrichtung (10) von dem Übergangsstück (40) zumindest bis nahe der Außenseite (74) der Brückenkappe (70) verlängert.

4. Brückenkappe (70) nach Anspruch 3,
**dadurch gekennzeichnet,**
**dass** ein Deckel (20) vorhanden ist, mittels dessen die Ausgleichshülse (30) von der Außenseite (74) aus verschließbar ist.

5. Brückenkappe (70) nach Anspruch 3 oder 4,
**dadurch gekennzeichnet,**
**dass** die Ausgleichshülse (30) gegenüber der Ankerhülse (50) einen größeren Durchmesser aufweist, wobei das Übergangsstück (40) von dem Durchmesser der Ausgleichshülse (30) auf den Durchmesser der Ankerhülse (50) überführt.

6. Brückenkappe (70) nach einem der vorhergehenden Ansprüche,
dass die Befestigungseinheit (1) in Richtung der Oberflächennormalen der Außenseite (74) eines Deckabschnitts (71) oder eines Seitenabschnitts (72) der Brückenkappe (70) oder der Anlageseite (75) der Brückenkappe (70) an die Brücke ausgerichtet ist oder schräg in einem Winkel von mindestens 10° gegenüber der Oberflächennormalen.

7. Brückenkappe (70) nach einem der Ansprüche 3 bis 6,
**dadurch gekennzeichnet,**
**dass** zumindest die Ausgleichshülse (30), das Übergangsstück (40) und die Ankerhülse (50) während der Fertigung der Brückenkappe (70) in die Brückenkappe (70) eingebracht sind.

8. Brückenkappe (70) nach einem der vorhergehenden Ansprüche,
**dadurch gekennzeichnet,**
**dass** das Übergangsstück (40) der Befestigungseinheit (1) in einem Übergangsbereich (43) zwischen dem ersten und dem zweiten zylindrischen Abschnitt (44,42) eine Anlage für einen Kopfteil des Befestigungsmittels (80) aufweist, wobei ein von dem Kopfteil abgekehrter Gewindeabschnitt bei vollständig eingeführtem Befestigungsmittel (80) über die Anlageseite (75) der Brückenkappe (70) zum Verbinden mit der Brücke vorsteht.

9. Brückenkappe (70) nach einem der Ansprüche 4 bis 8,
**dadurch gekennzeichnet,**
**dass** der Deckel (20) eine Dichtung (25) und/oder einen Abdeckabschnitt (21) mit einer Fase (22) aufweist und dass der Deckel (20) mit einem Zylinderabschnitt (24) in die Ausgleichshülse (30) eingesetzt ist.

10. Brückenkappe (70) nach einem der vorhergehenden Ansprüche,
**dadurch gekennzeichnet,**
**dass** das Befestigungsmittel (80) eine wieder lösbare Schraube ist.

11. Befestigungseinheit (1) zur Befestigung einer Brückenkappe (70) an einer Brücke (90) mit einem Befestigungsmittel (80) und einer Führungsvorrichtung (10) zur Einbringung in die Brückenkappe (70), die eine zylindrische Ankerhülse (50) umfasst, wobei
- die Befestigungseinheit (1) aus getrennten Einzelteilen zusammengesetzt ist, die neben der Ankerhülse (50) ein separates Übergangsstück (40) mit einem an den Durchmesser der Ankerhülse (50) angepassten ersten zylindrischen Abschnitt (44) und einem von diesem abgekehrten zweiten zylindrischen Abschnitt (42) umfassen,
- die Einzelteile der Befestigungseinheit (1) weiterhin eine in ihrem Durchmesser an den zweiten zylindrischen Abschnitt (42) angepasste Ausgleichshülse (30) umfassen,
- ein Deckel (20) vorhanden ist, mittels dessen die Ausgleichshülse (30) von ihrem dem Übergangsstück (40) abgekehrten, oberen Rand (31) aus verschließbar ist,
- die Ausgleichshülse (30) gegenüber der Ankerhülse (50) einen größeren Durchmesser aufweist, wobei das Übergangsstück (40) von dem Durchmesser der Ausgleichshülse (30) auf den Durchmesser der Ankerhülse (50) überführt,
- das Übergangsstück (40) der Befestigungseinheit (1) eine Anlage für einen Kopfteil des Befestigungsmittels (80) aufweist,
**dadurch gekennzeichnet,**
**dass** die Anlage für das Kopfteil des Befestigungsmittels (80) in einem Übergangsbereich (43) zwischen dem ersten und dem zweiten zylindrischen Abschnitt (44,42) des Übergangsstücks (40) angeordnet ist, wobei die zylindrische Ausgleichshülse (30) von
dem zweiten zylindrischen Abschnitt (42) des Übergangsstücks (40) umfasst ist, und
**dass** die Ausgleichshülse (30) von einem zylindrischen Rohr gebildet ist.

12. Befestigungseinheit (1) nach Anspruch 11,
**dadurch gekennzeichnet,**
**dass** die Einzelteile der Befestigungseinheit (1) ferner ein gegenüber der Ankerhülse (50) erweitertes Bodenteil (60) mit einer an den Durchmesser der Ankerhülse (50) angepassten Öffnung (61) aufweisen.

13. Befestigungseinheit (1) nach Anspruch 11 oder 12,
**dadurch gekennzeichnet,**
**dass** der obere Rand (31) der Ausgleichshülse (30) in einer zur Mittellängsachse rechtwinklig oder schräg ausgedehnten Ebene liegt, so dass die Befestigungseinheit (1) in Richtung einer Oberflächennormalen oder definiert schräg in einem Winkel von mindestens 10° gegenüber der Oberflächennormalen in einer Brückenkappe (70) montierbar ist.

14. Befestigungseinheit (1) nach einem der Ansprüche 11 bis 13,
**dadurch gekennzeichnet,**
**dass** der Deckel (20) eine Dichtung (25) und/oder einen Abdeckabschnitt (21) mit einer Fase (22) aufweist und dass der Deckel (20) mit einem Zylinderabschnitt (24) in die Ausgleichshülse (30) eingesetzt ist.

15. Befestigungseinheit (1) nach Anspruch 14,
**dadurch gekennzeichnet,**
**dass** der Zylinderabschnitt (24) eine umlaufende Nut (26) aufweist, in welche die Dichtung (25) eingesetzt ist.

16. Befestigungseinheit (1) nach einem der Ansprüche 11 bis 15,
**dadurch gekennzeichnet,**
**dass** das Befestigungsmittel (80) eine wieder lösbare Schraube ist.

17. Befestigungseinheit (1) nach einem der Ansprüche 11 bis 16,
**dadurch gekennzeichnet,**
**dass** die Einzelteile der Befestigungseinheit (1) zumindest teilweise vormontierbar oder vormontiert sind.

## Claims

1. Bridge cap (70), comprising, for fastening to a bridge (90), a fastening unit (1) having a fastening means (80) and a guide device (10) which is introduced into the bridge cap (70) and comprises a cylindrical anchor sleeve (50), **characterized in that**
the fastening unit (1) is composed of separate individual parts which, in addition to the anchor sleeve (50), comprise a separate transition piece (40) having a first cylindrical portion (44) which is adapted to the diameter of the anchor sleeve (50) and a second cylindrical portion (42) facing away from said first portion, which second portion is directed toward an outer face (74) of the bridge cap (70).

2. Bridge cap (70) according to claim 1,
**characterized in that**
the individual parts of the fastening unit (1) also have a bottom part (60) that is widened with respect to the anchor sleeve (50) and has an opening (61) which is adapted to the diameter of the anchor sleeve (50), the bottom part (60) being accommodated in a recess (73) on the abutment face (75) of the bridge cap (70) facing away from the outer face (74).

3. Bridge cap (70) according to either claim 1 or claim 2,
**characterized in that**
the individual parts of the fastening unit (1) furthermore have a compensating sleeve (30), the diameter of which is adapted to the second cylindrical portion (42) and which has a length such that the compensating sleeve (30) extends the guide device (10) from the transition piece (40) to at least near the outer face (74) of the bridge cap (70).

4. Bridge cap (70) according to claim 3,
**characterized in that**
a cover (20) is provided, by means of which the compensating sleeve (30) can be closed from the outer face (74).

5. Bridge cap (70) according to either claim 3 or claim 4,
**characterized in that**
the compensating sleeve (30) has a larger diameter than the anchor sleeve (50), the transition piece (40) transforming from the diameter of the compensating sleeve (30) to the diameter of the anchor sleeve (50).

6. Bridge cap (70) according to any of the preceding claims,
that the fastening unit (1) is aligned with the bridge in the direction of the surface normal of the outer face (74) of a cover portion (71) or a side portion (72) of the bridge cap (70) or the abutment face (75) of the bridge cap (70) or so that it is aligned obliquely at an angle of at least 10° with respect to the surface normal.

7. Bridge cap (70) according to any of claims 3 to 6,
**characterized in that**
at least the compensating sleeve (30), the transition piece (40) and the anchor sleeve (50) are introduced into the bridge cap (70) during the manufacture of the bridge cap (70).

8. Bridge cap (70) according to any of the preceding claims,
**characterized in that**
the transition piece (40) of the fastening unit (1) has an abutment for a head part of the fastening means (80) in a transition region (43) between the first and the second cylindrical portion (44, 42), a threaded portion facing away from the head part protruding, when the fastening means (80) are fully inserted, beyond the abutment face (75) of the bridge cap (70) for connecting to the bridge.

9. Bridge cap (70) according to any of claims 4 to 8,
**characterized in that**
the cover (20) has a seal (25) and/or a cover portion (21) having a chamfer (22) and **in that** a cylinder portion (24) of the cover (20) is inserted into the compensating sleeve (30).

10. Bridge cap (70) according to any of the preceding claims,
**characterized in that**
the fastening means (80) is a detachable screw.

11. Fastening unit (1) for fastening a bridge cap (70) to a bridge (90), having a fastening means (80) and a guide device (10) for introduction into the bridge cap (70), which device comprises a cylindrical anchor sleeve (50),
- the fastening unit (1) being composed of separate individual parts which, in addition to the anchor sleeve (50), comprise a separate transition piece (40) having a first cylindrical portion (44) which is adapted to the diameter of the anchor sleeve (50) and a second cylindrical portion (42) facing away from said first portion,
- the individual parts of the fastening unit (1) furthermore comprising a compensating sleeve (30), the diameter of which is adapted to the second cylindrical portion (42),
- a cover (20) being provided, by means of which the compensating sleeve (30) can be closed from its upper edge (31) facing away from the transition piece (40),
- the compensating sleeve (30) having a larger diameter than the anchor sleeve (50), the transition piece (40) transforming from the diameter of the compensating sleeve (30) to the diameter of the anchor sleeve (50),
- the transition piece (40) of the fastening unit (1) having an abutment for a head part of the fastening means (80),
**characterized in that**
the abutment for the head part of the fastening means (80) is arranged in a transition region (43) between the first and the second cylindrical portion (44, 42) of the transition piece (40), the cylindrical compensating sleeve (30) being comprised of the second cylindrical portion (42) of the transition piece (40), and **in that** the compensating sleeve (30) is formed by a cylindrical tube.

12. Fastening unit (1) according to claim 11,
**characterized in that**
the individual parts of the fastening unit (1) also have a bottom part (60) that is widened with respect to the anchor sleeve (50) and has an opening (61) which is adapted to the diameter of the anchor sleeve (50).

13. Fastening unit (1) according to either claim 11 or claim 12,
**characterized in that**
the upper edge (31) of the compensating sleeve (30) lies in a plane extending at right angles or obliquely to the central longitudinal axis, so that the fastening unit (1) can be mounted in a bridge cap (70) in the direction of a surface normal or in a manner defined obliquely at an angle of at least 10° with respect to the surface normal.

14. Fastening unit (1) according to any of claims 11 to 13,
**characterized in that**
the cover (20) has a seal (25) and/or a cover portion (21) having a chamfer (22) and **in that** a cylinder portion (24) of the cover (20) is inserted into the compensating sleeve (30).

15. Fastening unit (1) according to claim 14,
**characterized in that**
the cylinder portion (24) has a circumferential groove (26) into which the seal (25) is inserted.

16. Fastening unit (1) according to any of claims 11 to 15,
**characterized in that**
the fastening means (80) is a detachable screw.

17. Fastening unit (1) according to any of claims 11 to 16,
**characterized in that**
the individual parts of the fastening unit (1) are at least partially pre-mountable or pre-mounted.

## Revendications

1. Corniche de pont (70), laquelle comporte une unité de fixation (1), destinée à la fixation à un pont (90), comportant un moyen de fixation (80) et un dispositif de guidage (10) introduit dans la corniche de pont (70), laquelle comprend un manchon d'ancrage (50) cylindrique,
**caractérisée en ce**
**que** l'unité de fixation (1) se compose de parties individuelles séparées, lesquelles comprennent, à côté du manchon d'ancrage (50), une pièce de transition (40) séparée comportant une première section (44) cylindrique adaptée au diamètre du manchon d'ancrage (50) et une seconde section (42) cylindrique opposée à la première section cylindrique et dirigée vers un côté extérieur (74) de la corniche de pont (70).

2. Corniche de pont (70) selon la revendication 1,
**caractérisée en ce**
**que** les parties individuelles de l'unité de fixation (1) comportent en outre une partie de base (60) élargie par rapport au manchon d'ancrage (50) et comportant une ouverture (61) adaptée au diamètre du manchon d'ancrage (50), dans laquelle la partie de base (60) est reçue dans un évidement (73) sur le côté d'appui (75) de la corniche de pont (70) opposé au côté extérieur (74).

3. Corniche de pont (70) selon la revendication 1 ou 2,
**caractérisée en ce**
**que** les parties individuelles de l'unité de fixation (1) comportent en outre un manchon de compensation (30) adapté en diamètre à la seconde section (42) cylindrique et présentant une longueur telle que le manchon de compensation (30) étend le dispositif de guidage (10) de la pièce de transition (40) au moins jusqu'auprès du côté extérieur (74) de la corniche de pont (70).

4. Corniche de pont (70) selon la revendication 3,
**caractérisée en ce**
**qu'**un couvercle (20) est présent, au moyen duquel le manchon de compensation (30) peut être fermé depuis le côté extérieur (74).

5. Corniche de pont (70) selon la revendication 3 ou 4,
**caractérisée en ce**
**que** le manchon de compensation (30) présente un diamètre supérieur au celui du manchon d'ancrage (50), dans laquelle la pièce de transition (40) passe du diamètre du manchon de compensation (30) au diamètre du manchon d'ancrage (50).

6. Corniche de pont (70) selon l'une quelconque des revendications précédentes, l'unité de fixation (1) étant orientée en direction de la normale de surface du côté extérieur (74) d'une section de couvercle (71) ou d'une section latérale (72) de la corniche de pont (70) ou du côté d'appui (75) de la corniche de pont (70) sur le pont, ou obliquement à un angle d'au moins 10° par rapport à la normale de surface.

7. Corniche de pont (70) selon l'une quelconque des revendications 3 à 6, **caractérisée en ce**
**qu'**au moins le manchon de compensation (30), la pièce de transition (40) et le manchon d'ancrage (50) sont introduits dans la corniche de pont (70) lors de la fabrication de la corniche de pont (70).

8. Corniche de pont (70) selon l'une quelconque des revendications précédentes, **caractérisée en ce**
**que** la pièce de transition (40) de l'unité de fixation (1) comporte, dans une zone de transition (43) entre la première et la seconde section cylindrique (44, 42), un appui pour une partie de tête du moyen de fixation (80), dans laquelle une section filetée opposée à la partie de tête, lorsque le moyen de fixation (80) est complètement inséré, fait saillie du côté d'appui (75) de la corniche de pont (70) pour effectuer une liaison au pont.

9. Corniche de pont (70) selon l'une quelconque des revendications 4 à 8, **caractérisée en ce**
**que** le couvercle (20) comporte un joint (25) et/ou une section de recouvrement (21) comportant un chanfrein (22) et que le couvercle (20) est inséré dans le manchon de compensation (30) avec une section (24) cylindrique.

10. Corniche de pont (70) selon l'une quelconque des revendications précédentes, **caractérisée en ce**
**que** le moyen de fixation (80) est une vis pouvant être à nouveau desserrée.

11. Unité de fixation (1) destinée à la fixation d'une corniche de pont (70) à un pont (90) comportant un moyen de fixation (80) et un dispositif de guidage (10) destiné à l'introduction dans la corniche de pont (70), laquelle comprend un manchon d'ancrage (50) cylindrique, dans laquelle
- l'unité de fixation (1) se compose de parties individuelles séparées, lesquelles comprennent, à côté du manchon d'ancrage (50), une pièce de transition (40) séparée comportant une première section (44) cylindrique adaptée au diamètre du manchon d'ancrage (50) et une seconde section (42) cylindrique opposée à la première section cylindrique,
- les parties individuelles de l'unité de fixation (1) comprennent en outre un manchon de compensation (30) adapté en diamètre à la seconde section (42) cylindrique,
- un couvercle (20) est présent, au moyen duquel le manchon de compensation (30) peut être fermé depuis son bord supérieur (31) opposé à la pièce de transition (40),
- le manchon de compensation (30) présente un diamètre supérieur à celui du manchon d'ancrage (50), dans laquelle la pièce de transition (40) passe du diamètre du manchon de compensation (30) au diamètre du manchon d'ancrage (50),
- la pièce de transition (40) de l'unité de fixation (1) comporte un appui pour une partie de tête du moyen de fixation (80),
**caractérisée en ce**
**que** l'appui pour la partie de tête du moyen de fixation (80) est disposé dans une zone de transition (43) entre la première et la seconde section (44, 42) cylindrique de la pièce de transition (40), dans laquelle le manchon de compensation (30) cylindrique est compris par la seconde section cylindrique (42) de la pièce de transition (40), et
**que** le manchon de compensation (30) est formé par un tube cylindrique.

12. Unité de fixation (1) selon la revendication 11,
**caractérisée en ce**
**que** les parties individuelles de l'unité de fixation (1) comportent en outre une partie de base (60) élargie par rapport au manchon d'ancrage (50) et comportant une ouverture (61) adaptée au diamètre du manchon d'ancrage (50).

13. Unité de fixation (1) selon la revendication 11 ou 12,
**caractérisée en ce**
**que** le bord supérieur (31) du manchon de compensation (30) se situe dans un plan s'étendant perpendiculairement ou obliquement par rapport à un axe longitudinal médian de telle sorte que l'unité de fixation (1) peut être montée dans la direction d'une normale de surface ou définie obliquement à un angle d'au moins 10° par rapport à la normale de surface dans une corniche de pont (70).

14. Unité de fixation (1) selon l'une quelconque des revendications 11 à 13, **caractérisée en ce**
**que** le couvercle (20) comporte un joint (25) et/ou une section de recouvrement (21) comportant un chanfrein (22) et que le couvercle (20) est inséré dans le manchon de compensation (30) avec une section (24) cylindrique.

15. Unité de fixation (1) selon la revendication 14,
**caractérisée en ce**
**que** la section cylindrique (24) comporte une rainure (26) circonférentielle dans laquelle le joint (25) est inséré.

16. Unité de fixation (1) selon l'une quelconque des revendications 11 à 15, **caractérisée en ce**
**que** le moyen de fixation (80) est une vis pouvant être à nouveau desserrée.

17. Unité de fixation (1) selon l'une quelconque des revendications 11 à 16, **caractérisée en ce**
**que** les parties individuelles de l'unité de fixation (1) peuvent être ou sont au moins partiellement prémontées.
